Europäisches Patentamt

European Patent Office

Office européen des brevets

(19)

(11) **EP 1 219 572 B1**

(12) **EUROPEAN PATENT SPECIFICATION**

(45) Date of publication and mention
of the grant of the patent:
**24.03.2004 Bulletin 2004/13**

(51) Int Cl.⁷: **C03C 3/072**, C03C 3/108,
C03C 4/16, C03C 8/24

(21) Application number: **01130663.6**

(22) Date of filing: **21.12.2001**

(54) **Glass for encapsulating semiconductor and overcoat tube for encapsulating semiconductor using the same**

Glas zum Verkapseln von Halbleitern und Mantelröhre zum Verkapseln von Halbleitern und Verwendung dergleichen

Verre pour encapsuler des semiconducteurs et gaine utilisant celui-ci pour encapsuler des semiconducteurs

(84) Designated Contracting States:
**DE NL**

(30) Priority: **21.12.2000 JP 2000389438**
**21.11.2001 JP 2001355769**

(43) Date of publication of application:
**03.07.2002 Bulletin 2002/27**

(73) Proprietor: **NIPPON ELECTRIC GLASS COMPANY, Limited**
**Otsu-shi, Shiga (JP)**

(72) Inventors:
• **Hikata, Hajime**
**Otsu-shi, Shiga (JP)**
• **Hashimoto, Koichi**
**Otsu-shi, Shiga (JP)**

(74) Representative: **Henkel, Feiler & Hänzel**
**Möhlstrasse 37**
**81675 München (DE)**

(56) References cited:
**EP-A- 1 156 020**        **US-A- 4 824 809**

• **PATENT ABSTRACTS OF JAPAN vol. 012, no. 444 (C-545), 22 November 1988 (1988-11-22) -& JP 63 166735 A (OHARA INC), 9 July 1988 (1988-07-09)**

**Description**

Field of the Invention

The present invention relates to glass for encapsulating a semiconductor, i.e., glass for hermetically encapsulating an element such as a silicon diode, an emission diode or a thermistor, and an electrode material such as a molybdenum wire which is electrically connected to the element, as well as an overcoat for encapsulating semiconductor tube produced using the same.

Background Art

A diode element has an electric current-flowing direction, i.e., a positive direction and a no electric current-flowing direction, i.e., a negative direction, when a voltage is applied thereto. Namely, the diode element has a rectification effect.

The diode is required to pass a large amount of an electric current in the positive direction and required to pass no electric current in the negative direction. When a voltage is applied to the negative direction, a maximum voltage which can be resisted is called a reverse voltage. The higher the reverse voltage is, the more preferable the diode is. A slight amount of an electric current which flows when a voltage is applied to the negative direction is called a leakage current. The smaller leakage current is, the more prefarable the diode is.

A diode is constituted by a diode element and electrodes and a lead which conduct a voltage thereto. Generally, the diode element is interposed between the electrodes. In order to enhance an electrical conductivity of the element and the electrodes, a chip of silver may be inserted therebetween.

A diode element has such a structure that a P phase and an N phase are connected to each other at one point or plural points. Since diode element functions owing to movements of positive holes or electrons, PN connected points are particularly important. The positive holes and electrons inside the diode element are extremely sensitive to the adhesion of Li, Na and K. When the positive holes and electrons are adsorbed on or repelled by these components adhered to the element, the pattern of the P phase and the N phase is disturbed. Thus, it is not preferablle because the rectification function of the diode cannot be obtained or shortcircuting may be caused at a low reverse voltage.

Accordingly, the side of the element is generally covered with an SiN film, an $Al_2O_3$ film, or a glass film for covering a semiconductor free from Li, Na and K to protect the PN connected parts. Furthermore, the covered element is encapsulated into a tubular glass.

Conventionally, since a tubular glass encapsulating a diode element and functioning as a package has such a structure that PN connected parts and the surface of the tubular glass are not directly contacted with each other, it may contain Li, Na and K be included. These components are included not only for lowering the melting point of the glass to thereby prevent a semiconductor element from deterioration at a high temperature, but also for highly expanding the glass to thereby fit the thermal expansion coefficient of the glass to dumet as the electrode material.

Recently, in order to simplify a process and also to reduce a cost, a protecting film of a diode element has been tried to be omitted. Namely, it has been investigated that encapsulation is carried out in such a manner that the internal surface of a tubular glass is tightly contacted with a diode element to provide the tubular glass itself with a function as a protecting film. In such a diode, since an electrode is directly contacted with the internal surface of a tubular glass, molybdenum having an expansion coefficient similar to that of the tubular glass is used as the electrode material.

Specifically, the above-described diode is produced as follows. First, a diode element having no protecting film is encapsulated into a tubular glass in such a state that the element is interposed between molybdenum electrodes. With elevation of a temperature, the glass is softened and transformed and PN connected parts are tightly adhered with the internal surface of the tubular glass. Thus, the encapsulation of the diode element is completed. When an atmosphere is controlled so as to provide a higher pressure in the outside of the diode than that in the surrounding of the diode element, the adhesion can be further improved.

Such a tubular glass is required to satisfy the following: (1) for enhancing a reverse voltage reducing a leakage current, Li, Na and K are not essentially included; (2) for preventing PN connected parts from mutually diffusing to thereby deteriorate a reverse voltage, encapsulation can be carried out at a low temperature; (3) thermal expansion coefficient which is suitable for molybdenum electrodes; (4) no gas is generated from the glass at the time of encapsulation so as not to increase a leakage current or so as not to decrease a reverse voltage; (5) the glass has a high volume resistivity so that a leakage current become markedly small even if a high reverse voltage is applied; and (6) in order to increase a yield in the process for producing a diode, glass can be formed in a tubular form with a high accuracy.

Summary of the Invention

An object of the present invention is to provide glass for encapsulating a semiconductor which can satisfy the above-described requirements.

Another object of the present invention is to provide an overcoat for encapsulating a semiconductor produced using the glass.

These and other objects of the present invention have been accomplished by glass for encapsulating semiconductor comprising:

$SiO_2$ in an amount of from 20 to 50% by weight;
$Al_2O_3$ in an amount of from 1 to 12% by weight;
$B_2O_3$ in an amount of from 6 to 25% by weight;
PbO in an amount of from 30 to 55% by weight;
$Cs_2O$ in an amount of from 0.5 to 12% by weight; and
$Li_2O$, $Na_2O$ and $K_2O$ in a total amount of lower than 90 ppm,

each based on the total weight of said glass. Also, these and other objects of the present invention have been accomplished by an overcoat tube for encapsulating a semiconductor, comprising the above glass.

Detailed Description of the Invention

In the present invention, the reason why the composition is defined as described above will be described below. Unless otherwise indicated, the terms "%" and "% by weight" hereinafter mean percentage by weight based on the total amount of glass.

$SiO_2$ is a component for constituting a network of glass. Its content is from 20 to 50%, preferably from 31 to 38%. When the content is lower than 31%, the weatherability of the glass may be deteriorated. When the content is lower than 20%, it is not preferable because an appearance deterioration of a tubular glass such as discoloration may occur. On the other hand, when the content is higher than 38%, the glass may be hardened. When the content is higher than 50%, it is not preferable because the encapsulation temperature exceeds 760°C so that the PN connected parts are mutually diffused to deteriorate the reverse voltage.

$Al_2O_3$ is a component for improving the weatherability of glass or for stabilizing glass. Its content is from 1 to 12%, preferably from 2.2 to 8%. When the content is lower than 2.2%, glass may cause a phase separation so that a resulting tubular glass has a poor shape. When the content is lower than 1%, it is not preferable because the tubular glass form cannot be obtained. On the other hand, when the content is higher than 8%, the glass may be hardened. Further, when the content is higher than 12%, it is not preferable because the encapsulation temperature exceeds 760°C so that the PN connected parts are mutually diffused to deteriorate the reverse voltage.

$B_2O_3$ is a component for constituting a network of glass. Its content is from 6 to 25%, preferably from 10 to 18%. When the content is lower than 10%, the glass may be hardened. When the content is lower than 6%, it is not preferable because encapsulation temperature exceeds 760°C. On the other hand, when the content is higher than 18%, the glass may be deteriorated in weatherability. When the content is higher than 25%, it is not preferable because an appearance deterioration of a tubular glass such as discoloration may occur.

PbO is an oxide for modification of glass and forms glass together with the glass network-constituting components. PbO can elevate the electrical resistance of glass and soften glass. Its content is from 30 to 55%, preferably from 35 to 48%. When the content is lower than 35%, the glass may be hardened. When the content is lower than 30%, it is not preferable because the encapsulation temperature is higher than 760°C. On the other hand, when the content is higher than 48%, crystals may be formed during forming to cause difficulty in tubing. When it exceeds 55%, it is difficult to mold glass into a tubular form.

$Cs_2O$ is a component effective for stabilizing glass, lowering a glass temperature and regulating the thermal expansion coefficient of glass. Its content is from 0.5 to 12%, preferably from 2.5 to 8%. When the content is lower than 2.5%, the glass may be hardened and the thermal expansion coefficient may be decreased. Furthermore, the glass may become unstable to lower the liquidus viscosity to cause difficult in tubing. When the content is lower than 0.5%, it is not preferable because the encapsulation temperature exceeds 760°C. Furthermore, the thermal expansion coefficient of the glass does not fit to that of molybdenum electrodes to form cracks in a tubular glass at the time of encapsulation. Moreover, it is difficult to carry out tubing. On the other hand, when the content is higher than 8%, the thermal expansion coefficient of the glass may become high. When the content is higher than 12%, it is not preferable because the thermal expansion coefficient of the glass does not fit to that of molybdenum electrodes and the glass becomes unstable so that crystals are easily formed and it is difficult to carry out tubing.

As described hereinabove, $Li_2O$, $Na_2O$ or $K_2O$ exerts bad influences on PN connected parts. Thus, it is important that they are not essentially included in glass. The content is required to be limited to 90 ppm or lower, preferably 50 ppm or lower in total. Particularly, since $Na_2O$ provides a large influence, the content of $Na_2O$ is preferably 30 ppm or lower, more preferably 10 ppm or lower.

In addition to the above-described components, for the purpose of regulating the viscosity control of glass and improving the weatherability, melting property and clarifying property of glass, components such as $ZrO_2$, $TiO_2$, $P_2O_5$, $SO_3$, $Sb_2O_3$, F and Cl can be optionally added.

The glass of the present invention is preferably has an infrared ray transmittance coefficient (X) represented by the following equation of 0.7 or less:

$$X = (\log_{10}(a/b)) / t$$

wherein

a: transmittance (%) at 3846 cm$^{-1}$,
b: transmittance (%) at the minimum point around 3560 cm$^{-1}$,
t: thickness (mm) of a sample to be determined.

When a gas is generated from a tubular glass after encapsulation, bubbles are present between the glass and PN connected parts so that they are not adhered with each other. As a result, a leakage current is increased or a reverse voltage is reduced. The gas mainly comprises water in the glass. The water content is proportional to the infrared ray transmittance coefficient (X) represented by the above-described equation. The glass of the present invention has an infrared ray transmittance coefficient (X) of 0.7 or lower, preferably 0.6 or lower, and the more preferably 0 . 4 or lower. When the infrared ray transmittance coefficient is 0.4 or lower, generation of the gas in the vicinity of PN connected parts can be substantially completely prevented. When the coefficient (X) is higher than 0.4, the gas may be generated. When the coefficient (X) is higher than 0.6, the yield of diode may be decreased due to the generation of a gas. When the coefficient (X) is higher than 0.7, it is not preferable because a gas is further generated.

In order to reduce an infrared ray transmittance coefficient, i.e., in order to reduce a content of water in glass, it is important to use a raw material having a low water content. Futhermore, it is also effective to dry the raw material. For making an atmosphere dry in melting glass and further for reducing a partial pressure of water in glass, bubbling can be carried out with a gas such as dried air, oxygen or nitrogen. Also, raw materials such as a carbonate for generating $CO_2$ gas, a nitrate for generating $NO_x$ gas, and a sulfate for generating $SO_x$ gas can be added to a batch.

Furthermore, preferably the glass of the present invention has a temperature of 760°C or lower when the glass has a viscosity of $10^{6.3}$ poise, a thermal expansion coefficient of from $40 \times 10^{-7}/°C$ to $57 \times 10^{-7}/°C$, a volume resistivity of $10^{12}\Omega \cdot cm$ or higher at 250°C, and a liquidus viscosity is $10^{4.5}$ poise or more. The reason why numerical ranges of respective properties are defined as described above will be described below.

Encapsulation temperature:

When PN connected parts are exposed to a high temperature, they are mutually diffused to lower an reverse voltage. Therefore, encapsulation into a tubular glass is preferably carried out at a temperature as low as possible. Specifically, it is preferable that the temperature of the glass is 760°C or lower when the glass has a viscosity of $10^{6.3}$ poise (encapsulation temperature). When the encapsulation temperature is higher than 760°C, it is not preferable because PN connected parts are mutually diffused to thereby lowering the reverse voltage.

Thermal expansion coefficient:

Since a molybdenum electrodes are used in a diode without using a protecting film, preferably, the glass has a thermal expansion coefficient of from $40 \times 10^{-7}/°C$ to $57 \times 10^{-7}/°C$, more preferably from $45 \times 10^{-7}/°C$ to $55 \times 10^{-7}/°C$. When the thermal expansion coefficient is lower than $40 \times 10^{-7}/°C$ or higher than $57 \times 10^{-7}/°C$, cracks are formed in a tubular glass.

Volume resistivity:

It is said that glass is an insulating product. However, the glass does not absolutely pass an electric current. Accordingly, in order to reduce an amount of a leakage current as small as possible, a volume resistivity is required to be high. The glass is apt to have a reduced volume resistivity with elevation of a temperature. Preferably, the glass has a volume resistivity of $10^{12}\Omega \cdot cm$ or higer, more preferably $10^{13}\Omega \cdot cm$ or higher at 250°C. When the volume resistivity

is lower than $10^{12}\Omega\cdot$cm, it is not preferred because an amount of the leakage electric current increases.

Liquidus viscosity:

A liquidus viscosity is used as an index in generating crystals when a tubular glass formed. Preferably, the glass has a liquidus viscosity of $10^{4.5}$ poise or higher, more preferably $10^{5.0}$ poise or higher. When the liquidus viscosity is lower than $10^{5.0}$ poise, crystals may be readily generated in forming a tubular glass so that the tube has a partially varied viscosity to cause deformation in the tube or to form a portion having a foreign property, which are not desirable. When the liquidus viscosity is lower than $10^{4.5}$ poise, it is not preferred because crystals are vigorously deposited to cause cutting of the tube.

A process for producing an overcoat tube for encapsulating a semiconductor comprising the glass of the present invention will be described below.

A process for producing an overcoat tube in an industrial scale comprises a formulation and mixing step wherein a refined crystal powder and a mineral including a component for forming glass are measured and mixed to prepare a raw material to be charged into a furnace; a melting step for converting the raw material to molten glass; a forming step for forming the molten glass to a tubular glass; and a processing step for cutting the tube to a given size.

First, raw materials of glass are prepared and mixed. The raw materials comprise minerals of plural components such as oxides or carbonates and impurities. The raw materials can be prepared by taking their analytical data into consideration and are not particularly limited. The raw materials are measured by weight and mixed by an appropriate mixer corresponding to a required scale, such as a V mixer, a locking mixer and a mixer equipped with stirring blades. Thus, the raw materials for charging can be obtained.

Successively, the raw materials thus obtained are charged into a melting furnace so that the raw material may be converted to glass. The melting furnace comprises a melter for melting raw materials of glass to glass, a refiner for raising and removing bubbles included in the glass, and a passage (feeder) wherein the viscosity of the clarified glass obtained is lowered to one suitable for forming and the resulting product is introduced to a forming unit. As the melting furnace, a furnace of which surface is covered with a refractory or platinum is used. The furnace is heated with a burner or by conducting electricity to the glass. When bubbling is carried out, a nozzle for bubbling is installed in the bottom of the melter and a gas can be introduced into the melted glass. The introduced raw materials are converted to glass in the melter generally having a temperature of from 1300 to 1600°C, then introduced into the refiner having a temperature of from 1400 to 1600°C. In the refiner, bubbles inside the glass are made to be come up to the surface, then the bubbles are eliminated. The glass left the refiner loses its heat to have a decreased temperature during moving to a forming unit through the feeder so that the glass may have a viscosity suitable for forming glass, i.e., $10^4$ to $10^6$ dPa·S.

Successively, the glass is formed in the form of tube by the forming unit. As the forming method, Danner method, Bero method, down-draw method and up-draw method can be applied.

Thereafter, the tubular glass is cut to a given size to thereby obtain an overcoat tube for encapsulating a semiconductor. The cutting-processing of the tubular glass can be carried out by cutting the tube one by one by a diamond cutter. However, a method of cutting many tubular glasses at a time, e.g., a method comprising bundling many tubular glasses and cutting the bundle obtained by a diamond wheel cutter, is suitable for a mass production. Thus, such a method is commonly used.

Next, an encapsulation method of a semiconducor element using the overcoat tube of the present invention will be described below.

First, in the overcoat tube, electrode materials such as molybdenum wires are set so as to hold a semiconductor element between them using a jig. Thereafter, the whole is heated to soften and deform the overcoat tube to achieve hermetic encapsulation. According to such a method, small-sized electronic parts such as silicon diode, light-emitting diode and thermister can be produced.

The glass for encapsulating a semiconductor according to the present invention can be used, in addition to the use as a tubular glass, e.g., as a powdered glass. When the powdered glass is used, the powdered glass is dispersed in a solvent such as alcohol or water to form a slurry. The slurry obtained is dropped on a rotating semiconductor element so that the slurry is wound around the semiconductor element. Thereafter, encapsulation of the semiconductor element can be achieved by burning.

Examples

The present invention will be described on the basis of the following Examples.

Table 1

| | 1 | 2 | 3 | 4 | 5 |
|---|---|---|---|---|---|
| Glass composition(wt%) $SiO_2$ $Al_2O_3$ $B_2O_3$ PbO $Cs_2O$ $Li_2O$ (ppm) $Na_2O$ (ppm) $K_2O$ (ppm) | 34.5 3.2 16.3 41.8 4.2 <5 6 <5 | 31.2 7.9 17.8 37.3 5.8 <5 7 9 | 36.2 4.5 13.5 42.0 3.8 6 5 6 | 38.0 2.2 17.0 37.0 5.8 <5 7 10 | 31.0 5.2 16.5 44.5 2.8 <5 5 <5 |
| Infrared ray transmittance coefficient | 0.38 | 0.25 | 0.28 | 0.38 | 0.38 |
| Thermal expansion coefficient (x $10^{-7}$/°C) | 50.2 | 51.6 | 48.7 | 48.3 | 52.6 |
| Encapsulation temperature (°C) | 666 | 674 | 691 | 691 | 649 |
| Volume resistivity (Ω•cm) | $10^{13.0}$ | $10^{14.1}$ | $10^{13.3}$ | $10^{13.1}$ | $10^{13.7}$ |
| Liquidus viscosity (poise) | $10^{5.0}$ | $10^{6.1}$ | $10^{5.7}$ | $10^{5.8}$ | $10^{5.8}$ |
| Dielectric constant | 7.2 | 6.9 | 7.2 | 6.8 | 7.4 |
| Tubing property | O | O | O | O | O |
| Number of bubbles in PN connected parts | 0 | 0 | 0 | 0 | 0 |

Table 2

| | 6 | 7 | 8 | 9 | 10 |
|---|---|---|---|---|---|
| Glass composition(wt%) $SiO_2$ $Al_2O_3$ $B_2O_3$ PbO $Cs_2O$ $Li_2O$ (ppm) $Na_2O$ (ppm) $K_2O$ (ppm) | 34.2 5.3 10.8 41.9 7.8 6 7 9 | 31.9 6.0 11.7 46.2 4.2 <5 5 <5 | 38.0 2.2 17.0 37.0 5.8 <5 7 10 | 40.0 0.5 - 55.0 - 20 200 50000 | 40.0 10.0 - 50.0 - 6 7 9 |
| Infrared ray transmittance coefficient | 0.18 | 0.19 | 0.80 | 0.15 | 0.15 |
| Thermal expansion coefficient (x $10^{-7}$/°C) | 54.7 | 51.3 | 51.3 | 81.5 | 43.1 |
| Encapsulation temperature (°C) | 702 | 658 | 691 | 655 | 774 |
| Volume resistivity(Ω•cm) | $10^{13.6}$ | $10^{13.4}$ | $10^{14.1}$ | $10^{10.9}$ | $10^{13.1}$ |
| Liquidus viscosity(poise) | $10^{5.8}$ | $10^{5.2}$ | $10^{5.8}$ | $10^{5.6}$ | $10^{4.2}$ |
| Dielectric constant | 7.1 | 7.3 | 6.8 | 9.5 | 8.2 |
| Tubing property | O | O | O | O | x |
| Number of bubbles in PN connected parts | 0 | 0 | 2 | 0 | N/A *1 |

*1 Evaluation is impossible.

Tables 1 and 2 show Examples of the present invention (samples No. 1 to 8) and Comparative Examples (samples 9 and 10).

Respective samples were prepared as follows. Minium, pure silica powder, aluminum oxide, sodium pyroborate and cesium oxide, which are controlled in respective contents of Li, Na and K, were mixed in a predetermined amount, and melted in a crucible having no fear of alkali contamination at 1450°C for 3 hours with effecting oxygen bubbling (Only sample 8 was not subjected to bubbling). Successively, the resulting product was directly subjected to tubing.

Various properties of the samples obtained were evaluated.

As can be seen from the Tables, samples Nos. 1 to 8, which were Examples of the present invention, had a thermal expansion coefficient of from $48.3 \times 10^{-7}/°C$ to $54.7 \times 10^{-7}/°C$, an encapsulation temperature of from 649 to 702°C, a volume resistivity of from $10^{13.0}$ to $10^{14.1}$ Ω•cm, a liquidus viscosity of from $10^{5.0}$ to $10^{6.1}$ poise, and a desirable tubing property. Further, in samples Nos. 1 to 7 having an infrared ray transmittance coefficient of 0.7 or less, 30 samples were evaluated regarding number of bubbles in PN connected parts. As the result, in no samples, bubble was observed in PN connected parts and no samples were judged undesirable.

On the other hand, sample No. 9 has a too large thermal expansion coefficient, which does not fit to that of a molybdenum electrode. Furthermore, sample No. 9 contained a large amount of $K_2O$, which was feared to adversely affect an element after encapsulated. Sample No. 10 had a low liquidus viscosity and generated crystals at a low temperature. Furthermore, sample No. 10 was greatly deformed during the glass forming so that it could not be formed into the tubular shape. Therefore, number of bubbles in PN connected parts could not be evaluated.

Compositions of Examples and Comparative Examples were determined by calculation from the compositions for compounding. Contents of $Li_2O$, $Na_2O$ and $K_2O$ were determined by atomic absorption analysis after chemically treating. However, $K_2O$ of sample No. 9 was determined by batch calculation.

An infrared ray transmittance coefficient (X) was obtained by substituting transmittance $\underline{a}$ at 3846 cm$^{-1}$ and transmittance $\underline{b}$ at the minimum point around 3560 cm$^{-1}$, determined by an infrared spectrophotometer, to the following equation, then converting the value obtained to the thickness of 1 mm. Here, $\underline{t}$ represents a thickness (mm) of a sample to be determined.

$$X = (\log_{10}(a/b)) / t$$

A thermal expansion coefficient is obtained by processing a sample to a cylinder having a diameter of about 3 mm and a length of about 50 mm, then measuring an average linear expansion coefficient in a temperature range of 30 to 380°C by an autographic differential thermal expansion meter.

Encapsulation was carried out at a temperature corresponding to a viscosity of $10^{6.3}$ poise. For the determination of the encapsulation temperature, first, a glass softening point was determined by a fiber elongation method in accordance with ASTM C-338, and temperatures in the viscosity range of around $10^3$ poise were determined by a platinum ball pulling up method. The temperatures and the value of viscosity obtained were applied to the formula by Fulcher and the temperatures providing $10^{6.3}$ poise were determined.

The volume resistivity was determined at 250°C by a method according to ASTM C-657.

The liquidus viscosity was determined as follows. First, pulverized glass having a particle diameter of about 0.1 mm was placed into a platinum container in the form of boat, which was kept in a temperature gradient furnace for 100 hours, and taken out. The sample obtained was observed by a microscope and a temperature at which an initial phase of a crystal appeared (liquidus temperature) was determined. Then, based on the relationship between the temperature of the glass and the viscosity, which had been previously measured, a viscosity corresponding to the temperature at which an initial phase of a crystal appeared (liquidus viscosity) was determined.

The dielectric constant was determined as follows: A sample having a diameter of 30 mm and a height of 1 mm was prepared, then an electrode was adhered thereto, thereafter the dielectric constant was determined at 25°C and 1 MHz using an impedance analyzer.

The tubing property was determined as follows. Glass was subjected to tubing so as to provide a tube having an outer diameter of 3.50 mm and a thickness of 0.85 mm. Then, the resulting tube was cut to a length of 2 mm. Thereafter, the absence of crystals or bubbles were tested by the naked eyes. Thereafter, regarding tubes cleared the test, those satisfying or not satisfying an outer diameter-inner diameter tolerance of ± 0.02 were shown as "O" and "x", respectively.

The number of bubbles in PN connected parts was evaluated as follows. A silicon chip and molybdenum electrodes were encapsulated into a tubular glass to prepare 30 evaluation samples. Thereafter, insides of the samples were observed by a microscope having a factor of 30 and the number of samples wherein bubbles were observed in the silicon chip PN connected parts was counted.

As described hereinabove, the glass for encapsulating a semiconductor of the present invention is suitable as the material of an overcoat tube for encapsulating a semiconductor having both functions of protecting the surfaces of PN connected parts and functions of packages.

Furthermore, a diode element can be encapsulated by using the overcoat tube for encapsulating a semiconductor of the present invention without forming a protective film so that the process for producing diode can be simplified and the production cost can be reduced.

**Claims**

1.  Glass for encapsulating a semiconductor comprising:

    $SiO_2$ in an amount of from 20 to 50% by weight;
    $Al_2O_3$ in an amount of from 1 to 12% by weight;
    $B_2O_3$ in an amount of from 6 to 25% by weight;
    PbO in an amount of from 30 to 55% by weight;
    $Cs_2O$ in an amount of from 0.5 to 12% by weight; and
    $Li_2O$, $Na_2O$ and $K_2O$ in a total amount of lower than 90 ppm,

    each based on the total weight of said glass.

2.  The glass according to claim 1, which has infrared ray transmittance coefficient (X) represented by the following equation is 0.7 or lower:

$$X = (\log_{10}(a/b)) / t$$

    wherein

    a: transmittance (%) at 3846 $cm^{-1}$;
    b: transmittance (%) at the minimum point around 3560 $cm^{-1}$;
    t: thickness (mm) of a sample to be measured.

3.  The glass according to claim 1 or 2, wherein, when said glass has a viscosity of $10^{6.3}$ poise, the temperature of said glass is 760°C or lower and said glass has a thermal expansion coefficient of from $40 \times 10^{-7}$/°C to $57 \times 10^{-7}$/°C.

4.  The glass according to any one of claims 1 to 3, wherein said glass has a volume resistivity of $10^{12} \Omega \cdot cm$ or more at 250°C.

5.  The glass according to any one of claims 1 to 4, wherein said glass has a liquidus viscosity of $10^{4.5}$ poise or higher.

6.  The glass according to any one of claims 1 to 5, wherein said glass is formed into a tubular form.

7.  An overcoat tube for encapsulating a semiconductor, comprising the glass according to any one of claims 1 to 6.

8.  Use of the glass according to any one of claims 1 to 6 for manufacturing an overcoat tube for encapsulating a semiconductor.

9.  Use of the overcoat tube according to claim 7 for encapsulating a semiconductor.

**Patentansprüche**

1.  Glas zur Einkapselung eines Halbleiters, das umfasst:

    $SiO_2$ in einer Menge von 20 bis 50 Gew.-%,
    $Al_2O_3$ in einer Menge von 1 bis 12 Gew.-%,
    $B_2O_3$ in einer Menge von 6 bis 25 Gew.-%,
    PbO in einer Menge von 30 bis 55 Gew.-%,

Cs$_2$O in einer Menge von 0,5 bis 12 Gew.-%, und

Li$_2$O, Na$_2$O und K$_2$O in einer Gesamtmenge von weniger als 90 ppm,

jeweils bezogen auf das Gesamtgewicht des Glases.

2. Glas nach Anspruch 1, dessen Infrarotstrahlungsdurchlässigkeitskoeffizient (X), der durch die folgende Gleichung dargestellt wird, 0,7 oder niedriger ist:

$$X = (\log_{10}(a/b)) / t$$

worin

a: Durchlässigkeit (%) bei 3846 cm$^{-1}$;

b: Durchlässigkeit (%) am Minimum um 3560 cm$^{-1}$;

t: Dicke (mm) einer zu messenden Probe.

3. Glas nach Anspruch 1 oder 2, wobei das Glas eine Viskosität von $10^{6,3}$ Poise aufweist, die Temperatur des Glases 760 °C oder weniger beträgt und das Glas einen Wärmeausdehnungskoeffizienten von 40 x 10$^{-7}$/°C bis 57 x 10$^{-7}$/°C aufweist.

4. Glas nach einem der Ansprüche 1 bis 3, wobei das Glas einen spezifischen Volumenwiderstand von $10^{12}$ Ω·cm oder mehr bei 250 °C aufweist.

5. Glas nach einem der Ansprüche 1 bis 4, wobei das Glas eine Liquidus-Viskosität von $10^{4,5}$ Poise oder höher aufweist.

6. Glas nach einem der Ansprüche 1 bis 5, wobei das Glas zu einer Rohrform geformt wird.

7. Deckbeschichtungsrohr zur Einkapselung eines Halbleiters, das das Glas nach einem der Ansprüche 1 bis 6 umfasst.

8. Verwendung des Glases nach einem der Ansprüche 1 bis 6 zur Herstellung eines Deckbeschichtungsrohrs zur Einkapselung eines Halbleiters.

9. Verwendung des Deckbeschichtungsrohrs nach Anspruch 7 zur Einkapselung eines Halbleiters.

**Revendications**

1. Verre pour encapsuler un semi-conducteur, comprenant :

SiO$_2$ en une quantité de 20 à 50 % en poids ;

Al$_2$O$_3$ en une quantité de 1 à 12 % en poids ;

B$_2$O$_3$ en une quantité de 6 à 25 % en poids ;

PbO en une quantité de 30 à 55 % en poids ;

Cs$_2$O en une quantité de 0,5 à 12 % en poids ; et

Li$_2$O, Na$_2$O et K$_2$O en une quantité totale inférieure à 90 ppm,

chacune étant basée sur le poids total dudit verre.

2. Verre selon la revendication 1, qui a un coefficient de transmittance des rayons infrarouges (X) représenté par l'équation suivante de 0,7 ou moins :

$$X = (\log_{10}(a/b))/t$$

où a : transmittance (%) à 3846 cm$^{-1}$ ;

b : transmittance (%) au point minimal autour de 3560 cm$^{-1}$ ;

t : épaisseur (mm) d'un échantillon à mesurer.

3. Verre selon la revendication 1 ou 2, dans lequel, lorsque ledit verre a une viscosité de 10$^{6,3}$ poises, la température dudit verre est de 760 °C ou moins et ledit verre a un coefficient de dilatation thermique de 40x10$^{-7}$/°C à 57x10$^{-7}$/°C.

4. Verre selon l'une quelconque des revendications 1 à 3, dans lequel ledit verre a une résistivité volumique de 10$^{12}$ Ω.cm ou plus à 250 °C.

5. Verre selon l'une quelconque des revendications 1 à 4, dans lequel ledit verre a une viscosité liquide de 10$^{4,5}$ poises ou plus.

6. Verre selon l'une quelconque des revendications 1 à 5, dans lequel ledit verre est façonné en une forme tubulaire.

7. Tube d'enrobage pour encapsuler un semi-conducteur, comprenant le verre selon l'une quelconque des revendications 1 à 6.

8. Utilisation du verre selon l'une quelconque des revendications 1 à 6 pour fabriquer un tube d'enrobage pour encapsuler un semi-conducteur.

9. Utilisation d'un tube d'enrobage selon la revendication 7 pour encapsuler un semi-conducteur.